# EUROPÄISCHE PATENTSCHRIFT

(11) **EP 4 320 410 B1**
(45) Veröffentlichungstag und Bekanntmachung des Hinweises auf die Patenterteilung: **03.12.2025**
(21) Anmeldenummer: 21718080.1
(22) Anmeldetag: 07.04.2021
(51) Int. Cl.: G01D 5/14, G01D 18/00

(54) **VERFAHREN ZUR INITIALISIERUNG EINES DREHWINKELMESSSYSTEMS UND DREHWINKELMESSSYSTEM**
METHOD FOR INITIALIZING AN ANGLE-OF-ROTATION MEASUREMENT SYSTEM, AND ANGLE-OF-ROTATION MEASUREMENT SYSTEM
PROCÉDÉ D'INITIALISATION D'UN SYSTÈME DE MESURE D'ANGLE DE ROTATION ET SYSTÈME DE MESURE D'ANGLE DE ROTATION

(43) Veröffentlichungstag der Anmeldung: 14.02.2024
(73) Patentinhaber: Fraba B.V., 6416 SG Heerlen (NL)
(72) Erfinder: VOLKER, Hanno, 52064 Aachen (DE)
(74) Vertreter: terpatent PartGmbB
(86) Internationale Anmeldenummer: PCT/EP2021/059017
(87) Internationale Veröffentlichungsnummer: WO 2022/214167

(56) Entgegenhaltungen:
- DE-A1- 102004 062 448
- DE-A1- 102008 032 046
- DE-A1- 102012 012 874
- US-A1- 2015 130 450

## Beschreibung

Die vorliegende Erfindung betrifft ein Verfahren zur Initialisierung eines Drehwinkelmesssystems sowie ein Drehwinkelmesssystem zur Erfassung einer Drehbewegung einer Welle, umfassend eine drehbare Rotoreinheit, die ausgebildet ist, mit der Welle mitdrehend montiert zu sein, und die mehrere permanentmagnetische Erregermagnete aufweist, eine feststehende Statoreinheit mit einem Wiegand-Multiturnsensor, einem Datenspeicher und einer Auswerteeinheit, und eine Singleturnsensoreinheit, durch die eine Winkelposition der Rotoreinheit bezogen auf die Statoreinheit erfassbar ist, wobei die Auswerteeinheit mit dem Wiegand-Multiturnsensor, der Singleturnsensoreinheit und dem Datenspeicher verbunden ist und ausgebildet ist, einen Ist-Teildrehungszählwert, der eine Anzahl von 360°/N-Teildrehungen der Rotoreinheit bezogen auf die Statoreinheit angibt, wobei gilt N=2ⁿ mit n=1, 2, 3, ..., und einen Ist-Winkelpositionswert, der eine relative Winkelposition der Rotoreinheit bezogen auf die Statoreinheit angibt, zu bestimmen und den bestimmten Ist-Teildrehungszählwert sowie den bestimmten Ist-Winkelpositionswert in dem Datenspeicher abzuspeichern.

Derartige Drehwinkelmesssysteme sind aus dem Stand der Technik hinlänglich bekannt und werden insbesondere zur Steuerung und Überwachung von Elektromotoren, insbesondere Servomotoren, in Maschinen, Anlagen oder Fahrzeugen eingesetzt. Drehwinkelmesssysteme werden vielfach auch als Winkelmesseinrichtung, Drehwinkelsensor oder Drehgeber bezeichnet.

Bei Drehwinkelmesssystemen mit einem Wiegand-Multiturnsensor, insbesondere bei Drehwinkelmesssystemen deren Rotoreinheit und Statoreinheit durch separate Baugruppen gebildet sind, können durch unkontrollierte Bewegungen der Rotoreinheit mit den permanentmagnetischen Erregermagneten bezogen auf die Statoreinheit mit dem Wiegand-Multiturnsensor beim Transport und bei der Montage des Drehwinkelmesssystems unbeabsichtigte Zählimpulse im Wiegand-Multiturnsensor ausgelöst werden, die typischerweise selbst ohne externe Energieversorgung des Drehwinkelmesssystems ein Inkrementieren oder Dekrementieren des im Datenspeicher gespeicherten Ist-Teildrehungszählwertes bewirken. Derartige Drehwinkelmesssysteme können daher nach der Montage am Einsatztort einen undefinierten Ist-Teildrehungszählwert aufweisen.

Da der im Datenspeicher gespeicherte Ist-Teildrehungszählwert im Betrieb des Drehwinkelmesssystems typischerweise lediglich inkrementiert bzw. dekrementiert wird, ist es für die ordnungsgemäße Funktion des Drehwinkelmesssystems jedoch entscheidend, dass der Datenspeicher nach der Montage einen definierten Ist-Teildrehungszählwert aufweist. Drehwinkelmesssysteme werden daher nach der Montage typischerweise initialisiert, um einen definierten Ausgangszustand einzustellen.

Aus der DE 10 2008 032 046 A1 ist ein Verfahren zur Initialisierung eines ein Drehwinkelmesssystem umfassenden Positionsbestimmungssystems bekannt, wobei das Drehwinkelmesssystem und ein Linearsensorsystem genutzt werden, um stets ein akkurates Positionssignal eines Aktuatorelements zu generieren.

Aus der US 2015/0130450 A1 und der DE 10 2012 012 874 A1 ist jeweils ein Drehwinkelmesssystem mit einem Wiegand-Multiturnsensor bekannt.

Ferner wird jeweils ein Verfahren zur Korrektur eines Umdrehungszählwerts beschrieben.

Aus der DE 10 2004 062 448 A1 ist ein weiteres Drehwinkelmesssystem mit einem Wiegand-Multiturnsensor bekannt.

Es stellt sich vor diesem Hintergrund die Aufgabe, ein Drehwinkelmesssystem zu schaffen, das zuverlässig und auf einfache Weise initialisiert werden kann.

Diese Aufgabe wird durch ein Verfahren zur Initialisierung eines Drehwinkelmesssystems mit den Merkmalen des Anspruchs 1 sowie durch ein Drehwinkelmesssystem mit den Merkmalen des Anspruchs 4 gelöst.

Bei dem erfindungsgemäßen Verfahren zur Initialisierung des Drehwinkelmesssystems wird nach der Montage des Drehwinkelmesssystems an der zu erfassenden Welle eine vordefinierte Initialisierungswinkelposition der mit der Welle mitdrehend montierten Rotoreinheit relativ zu der feststehenden Statoreinheit des Drehwinkelmesssystems eingestellt. Hierbei kann eine einzige Initialisierungswinkelposition vordefiniert sein oder können mehrere typischerweise im Wesentlichen äquidistant verteilte Initialisierungswinkelpositionen vordefiniert sein. Vorzugsweise entspricht die Anzahl vordefinierter Initialisierungswinkelpositionen der Anzahl der Erregermagnete der Rotoreinheit. Vorzugsweise ist die mindestens eine Initialisierungswinkelposition derart vordefiniert, dass in jeder Initialisierungswinkelposition ein Erregermagnet der Rotoreinheit benachbart zu dem Wiegand-Multiturnsensor angeordnet ist. Im Falle mehrerer Initialisierungswinkelpositionen wird typischerweise die in Drehrichtung der Welle nächstliegende vordefinierte Initialisierungswinkelposition eingestellt. Die mindestens eine Initialisierungswinkelposition kann auch über ein Initialisierungswinkelintervall definiert sein, wobei in diesem Fall jede beliebige Winkelposition innerhalb des Initialisierungswinkelintervalls eine Initialisierungswinkelposition bildet.

Wenn die vordefinierte Initialisierungswinkelposition der Rotoreinheit relativ zur Statoreinheit eingestellt ist, wird aus dem Datenspeicher des Drehwinkelmesssystems der abgespeicherte Ist-Teildrehungszählwert ausgelesen, der die Anzahl von 360°/N-Teildrehungen der Rotoreinheit bezogen auf die Statoreinheit angibt, wobei gilt N=2ⁿ mit n=1, 2, 3, .... Der Ist-Teildrehungszählwert gibt also zumindest die Anzahl von Halbdrehungen (n=1) an, kann jedoch auch eine höhere Auflösung als halbe Umdrehungen aufweisen, also beispielsweise eine Anzahl von Vierteldrehungen (n=2) oder Achteldrehungen (n=3) angeben.

In jedem Fall kann basierend auf dem ausgelesenen Ist-Teildrehungszählwert ein eindeutiger Ist-Teilsegmentwert bestimmt werden, der angibt, in welchem 360°/N-Teilsegment der insgesamt N 360°/N-Teilsegmente einer vollen Umdrehung sich die Rotoreinheit bezogen auf die Statoreinheit befindet. Jedes Teilsegment umfasst hierbei einen Winkelpositionsbereich von (360/N)°. Typischerweise umfasst das erste 360°/N-Teilsegment den Winkelpositionsbereich von 1° bis (360/N)°, das zweite 360°/N-Teilsegment den Winkelpositionsbereich von [(360/N)+1]° bis [2:(360/N)]°, usw.

Erfindungsgemäß wird aus dem ausgelesenen Ist-Teildrehungszählwert der Ist-Teilsegmentwert bestimmt und wird dieser mit einem der jeweiligen Initialisierungswinkelposition zugeordneten Soll-Teilsegmentwert verglichen. Da die Winkelposition der Rotoreinheit relativ zur Statoreinheit für jede vordefinierte Initialisierungswinkelposition eindeutig bekannt ist, ist jeder vordefinierten Initialisierungswinkelposition auch ein eindeutiger Soll-Teilsegmentwert zugeordnet. Der Ist-Teilsegmentwert kann beispielsweise im Fall von N=2 einfach durch Auswerten eines einzelnen Bits des ausgelesenen Ist-Teildrehungszählwertes, vorzugweise durch Auswerten des letzten Bits des ausgelesenen Ist-Teildrehungszählwertes, bestimmt werden. Falls die eingestellte Initialisierungswinkelposition im Winkelpositionsbereich des ersten 360°/N-Teilsegments liegt, dann gibt der Soll-Teilsegmentwert das erste Teilsegment an, falls die eingestellte Initialisierungswinkelposition im Winkelpositionsbereich des zweiten 360°/N-Teilsegments liegt, dann gibt der Soll-Teilsegmentwert das zweite Teilsegment an, usw.

Falls der aus dem ausgelesenen Ist-Teildrehungszählwert bestimmte Ist-Teilsegmentwert nicht mit dem Soll-Teilsegmentwert übereinstimmt, dann muss der im Datenspeicher gespeicherte Ist-Teildrehungszählwert korrigiert werden. Zur Korrektur wird der im Datenspeicher gespeicherte Ist-Teildrehungszählwert derart erhöht oder verringert, dass der durch den gespeicherten Ist-Teildrehungszählwert angegebene Ist-Teilsegmentwert anschließend mit dem Soll-Teilsegmentwert übereinstimmt. Typischerweise wird der Ist-Teildrehungszählwert wahlweise um einen Wert X≤(N/2) erhöht oder verringert. Unter einem Erhöhen beziehungsweise Verringern des im Datenspeicher gespeicherten Ist-Teildrehungszählwertes ist hierbei im Sinne der vorliegenden Erfindung insbesondere auch das Speichern eines Teildrehungszählwertoffsets zu verstehen, der dann jeweils beim Auslesen des gespeicherten Ist-Teildrehungszählwertes zu dem gespeicherten Ist-Teildrehungszählwert addiert wird beziehungsweise von dem gespeicherten Ist-Teildrehungszählwert subtrahiert wird. Falls der aus dem ausgelesenen Ist-Teildrehungszählwert bestimmte Ist-Teilsegmentwert mit dem Soll-Teilsegmentwert übereinstimmt, bleibt der gespeicherte Ist-Teildrehungszählwert unverändert.

Durch das erfindungsgemäße Verfahren zur Initialisierung des Drehwinkelmesssystems wird auf einfache Weise sichergestellt, dass im Datenspeicher nach der Initialisierung ein definierter Ist-Teildrehungszählwert gespeichert ist, der insbesondere die korrekte Teilsegment-Lage der Rotoreinheit relativ zur Statoreinheit angibt. Das erfindungsgemäße Verfahren ermöglicht folglich eine einfache und zuverlässige Initialisierung des Drehwinkelmesssystems.

Vorzugsweise wird zum Einstellen der vordefinierten Initialisierungswinkelposition eine Drehbewegung der Rotoreinheit relativ zur Statoreinheit gestartet. Typischerweise geschieht dies durch Antreiben der Welle. Während der Drehbewegung wird - wie aus dem Stand der Technik hinlänglich bekannt - mittels der Singleturnsensoreinheit (im Wesentlichen kontinuierlich) ein Ist-Winkelpositionswert bestimmt, der die aktuelle relative Winkelposition der Rotoreinheit bezogen auf die Statoreinheit angibt. Der bestimmte Ist-Winkelpositionswert wird mit mindestens einem vordefinierten Initialisierungswinkelpositionswert abgeglichen, wobei jeder Initialisierungswinkelpositionswert einer eindeutigen vordefinierten Initialisierungswinkelposition zugeordnet ist. Wenn der bestimmte Ist-Winkelpositionswert mit einem vordefinierten Initialisierungswinkelpositionswert übereinstimmt, dann gilt die diesem Initialisierungswinkelpositionswert zugeordnete Initialisierungswinkelposition als eingestellt und es werden die oben genannten, auf das Einstellen der Initialisierungswinkelposition folgenden Verfahrensschritte ausgeführt. Da diese nachfolgenden Verfahrensschritte im Allgemeinen sehr schnell ausgeführt werden können, ist ein Stoppen der Drehbewegung der Rotoreinheit beim Erreichen der Initialisierungswinkelposition nicht zwangsläufig erforderlich. Dies ermöglicht ein einfaches und zuverlässiges Einstellen der vordefinierten Initialisierungswinkelposition. Im Falle mehrerer vordefinierter Initialisierungswinkelpositionen wird hierbei automatisch die in Drehrichtung nächstliegende vordefinierte Initialisierungswinkelposition eingestellt, wodurch die zur Initialisierung des Drehwinkelmesssystems erforderliche Verdrehung der Welle minimiert wird.

Wie aus dem Stand der Technik hinlänglich bekannt ist, wird bei Wiegand-Multiturnsensoren durch einen Polaritätswechsel des von den permanentmagnetischen Erregermagneten am Ort des Wiegand-Multiturnsensors erzeugten Erregermagnetfeldes ein sogenannter Wiegand-Puls ausgelöst. Der Wiegand-Puls wird von dem Wiegand-Multiturnsensor erfasst und insbesondere zur Bestimmung des Ist-Teildrehungszählwertes ausgewertet. Es ist ferner bekannt, dass bei Wiegand-Multiturnsensoren sogenannte "verkümmerte" Pulse auftreten können. Dies bezeichnet den Fall, dass - nach einem vorausgegangenen Drehrichtungswechsel - durch den beim Vorbeidrehen eines permanentmagnetischen Erregermagneten am Wiegand-Multiturnsensor verursachten Polaritätswechsel des Erregermagnetfeldes kein beziehungsweise nur ein für die Erfassung nicht ausreichend starker Wiegand-Puls erzeugt wird.

Vorteilhafterweise wird daher nach dem Einstellen der vordefinierten Initialisierungswinkelposition und vor der zuvor beschriebenen Überprüfung des Ist-Teildrehungszählwertes ein Ist-Pulspolaritätswert, der die Polarität des letzten im Wiegand-Multiturnsensor ausgelösten Wiegand-Pulses angibt, aus einem Datenspeicher ausgelesen und der ausgelesene Ist-Pulspolaritätswert mit einem der eingestellten Initialisierungswinkelposition zugeordneten Soll-Pulspolaritätswert abgeglichen. Vorzugsweise ist die mindestens eine Initialisierungswinkelposition hierbei derart vordefiniert, dass in jeder Initialisierungswinkelposition ein permanentmagnetischer Erregermagnet der Rotoreinheit benachbart zum Wiegand-Multiturnsensor angeordnet ist, sodass für jede Initialisierungswinkelposition der Soll-Pulspolaritätswert - unabhängig von der Drehrichtung der Welle - durch die magnetische Polarität des in der Initialisierungswinkelposition jeweils benachbart zum Wiegand-Multiturnsensor angeordneten Erregermagneten eindeutig festgelegt ist. Falls der ausgelesene Ist-Pulspolaritätswert nicht mit dem Soll-Pulspolaritätswert der eingestellten Initialisierungswinkelposition übereinstimmt, dann bedeutet dies, dass ein "verkümmerter" Puls aufgetreten ist. In diesem Fall kann der Ist-Teildrehungszählwert nicht zuverlässig wie zuvor beschrieben überprüft und korrigiert werden. Erfindungsgemäß wird die Rotoreinheit in diesem Fall daher in die in Drehrichtung nächste Initialisierungswinkelposition gedreht. Falls nur eine Initialisierungswinkelposition vordefiniert ist, dann wird die Rotoreinheit hierbei um eine volle Umdrehung verdreht. Da es bei Beibehaltung der Drehrichtung ausgeschlossen ist, dass zwei "verkümmerte" Pulse nacheinander auftreten, wird beim Verdrehen der Rotoreinheit in die nächste Initialisierungswinkelposition in jedem Fall ein nicht "verkümmerter" Wiegand-Puls ausgelöst, sodass nach dem Verdrehen zuverlässig eine Überprüfung und eventuell eine Korrektur des Ist-Teildrehungszählwertes durchgeführt werden kann. Dies ermöglicht eine besonders zuverlässige Initialisierung des Drehwinkelmesssystems.

Das erfindungsgemäße Drehwinkelmesssystem umfasst eine drehbare Rotoreinheit, die ausgebildet ist, mit der Welle mitdrehend montiert zu sein, und eine feststehende Statoreinheit. Die Rotoreinheit umfasst mehrere permanentmagnetische Erregermagnete, und die Statoreinheit umfasst einen Wiegand-Multiturnsensor, einen Datenspeicher, und eine Auswerteeinheit.

Die permanentmagnetischen Erregermagnete der Rotoreinheit sind derart entlang des Umfangs der Rotoreinheit angeordnet, dass die Polarität des durch die Erregermagnete am Ort des Wiegand-Multiturnsensors erzeugten Erregermagnetfeldes bei einer vollen Umdrehung der Rotoreinheit mindestens zweimal wechselt. Bei einer vollen Umdrehung der Rotoreinheit werden folglich mindestens zwei Wiegand-Pulse im Wiegand-Multiturnsensor erzeugt, sodass aus der Anzahl der Wiegand-Pulse - wie aus dem Stand der Technik hinlänglich bekannt - die Anzahl von 360/N-Teildrehungen (N=2ⁿ, n=1, 2, 3, ...) der Rotoreinheit bezogen auf die Statoreinheit bestimmt werden kann. Die Rotoreinheit umfasst typischerweise einen scheibenförmigen Träger, der an der Welle montierbar ist und an dem die mehreren Erregermagnete befestigt sind.

Das erfindungsgemäße Drehwinkelmesssystem umfasst ferner eine Singleturnsensoreinheit, durch die eine Winkelposition der Rotoreinheit bezogen auf die Statoreinheit erfassbar ist. Die Singleturnsensoreinheit umfasst im Allgemeinen ein feststehendes, der Statoreinheit zugeordnetes Sensormittel sowie ein an der Rotoreinheit angeordnetes Sensormittel, wobei die Sensormittel funktional derart zusammenwirken, dass die Winkelposition der Rotoreinheit bezogen auf die Statoreinheit erfassbar ist. Die Singleturnsensoreinheit kann grundsätzlich eine beliebige aus dem Stand der Technik bekannte Singleturnsensoreinheit sein, durch die die Winkelposition der Rotoreinheit relativ zur Statoreinheit erfassbar ist. Die Singleturnsensoreinheit kann beispielsweise eine aus dem Stand der Technik bekannter kapazitive Singleturnsensoreinheit, optische Singleturnsensoreinheit oder mechanische Singleturnsensoreinheit sein.

Der Datenspeicher kann grundsätzlich ein beliebiger aus dem Stand der Technik bekannter Datenspeicher sein und aus einer beliebigen Anzahl von flüchtigen und/oder nichtflüchtigen Speicherkomponenten gebildet sein. Typischerweise umfasst der Datenspeicher mindestens eine flüchtige Speicherkomponente und eine nichtflüchtige Speicherkomponente.

Die Auswerteeinheit ist ausgebildet - wie aus dem Stand der Technik bekannt - einen Ist-Teildrehungszählwert, der die Anzahl von 360/N-Teildrehungen der Rotoreinheit bezogen auf die Statoreinheit angibt, und einen Ist-Winkelpositionswert, der eine relative Winkelposition der Rotoreinheit bezogen auf die Statoreinheit angibt, zu bestimmen. Die Auswerteeinheit ist ferner ausgebildet, den bestimmten Ist-Teildrehungszählwert sowie den bestimmten Ist-Winkelpositionswert in dem Datenspeicher abzuspeichern. Die Auswerteeinheit kann grundsätzlich aus einer beliebigen Anzahl von miteinander zusammenwirkenden Komponenten gebildet sein. Die Auswerteeinheit kann - wie aus dem Stand der Technik bekannt - beispielsweise durch eine spezielle elektrische Schaltung und/oder durch einen entsprechend programmierten integrierten Schaltkreis oder Mikrocontroller gebildet sein.

Erfindungsgemäß weist das Drehwinkelmesssystem ferner eine Initialisierungseinheit auf, der ein Soll-Teilsegmentwert vorgegeben ist, wobei der Soll-Teilsegmentwert typischerweise in dem Datenspeicher abgespeichert ist. Die erfindungsgemäße Initialisierungseinheit ist ausgebildet, den Ist-Teildrehungszählwert aus dem Datenspeicher auszulesen, und aus dem Ist-Teildrehungszählwert einen Ist-Teilsegmentwert zu bestimmen, der angibt, in welchem 360°/N-Teilsegment einer vollen Umdrehung sich die Rotoreinheit bezogen auf die Statoreinheit befindet. Die erfindungsgemäße Initialisierungseinheit ist ferner ausgebildet, den im Datenspeicher gespeicherten Ist-Teildrehungszählwert zu erhöhen oder zu verringern, falls der Ist-Teilsegmentwert nicht mit dem Soll-Teilsegmentwert übereinstimmt. Der Ist-Teildrehungszählwert wird hierbei derart erhöht oder verringert, dass der durch den gespeicherten Ist-Teildrehungszählwert angegebene Ist-Teilsegmentwert anschließend mit dem Soll-Teilsegmentwert übereinstimmt. Typischerweise ist die erfindungsgemäße Initialisierungseinheit ausgebildet, den Ist-Teildrehungszählwert wahlweise um einen Wert X≤(N/2) zu erhöhen oder zu verringern. Unter einem Erhöhen beziehungsweise Verringern des im Datenspeicher gespeicherten Ist-Teildrehungszählwertes ist hierbei im Sinne der vorliegenden Erfindung insbesondere auch das Speichern eines Teildrehungszählwertoffsets zu verstehen, der dann jeweils beim Auslesen des gespeicherten Ist-Teildrehungszählwertes zu dem gespeicherten Ist-Teildrehungszählwert addiert wird beziehungsweise von dem gespeicherten Ist-Teildrehungszählwert subtrahiert wird. Der Teildrehungszählwertoffset wird hierbei typischerweise in einer nichtflüchtigen Speicherkomponente des Datenspeichers abgespeichert, sodass dieser auch nach einer Unterbrechung der Energieversorgung des Drehwinkelmesssystems noch verfügbar ist. Vorzugsweise ist die Initialisierungseinheit durch einen entsprechend programmierten integrierten Schaltkreis oder Mikrocontroller gebildet.

Die erfindungsgemäße Initialisierungseinheit ermöglicht die Durchführung des zuvor beschriebenen erfindungsgemäßen Verfahrens zur Initialisierung des Drehwinkelmesssystems, durch das sichergestellt ist, dass im Datenspeicher nach der Initialisierung ein definierter Ist-Teildrehungszählwert gespeichert ist, der die korrekte Teilsegment-Lage der Rotoreinheit relativ zur Statoreinheit angibt. Die erfindungsgemäße Initialisierungseinheit schafft folglich ein Drehwinkelmesssystem, dass zuverlässig und auf einfache Weise initialisiert werden kann.

Vorzugsweise weist die Rotoreinheit mindestens vier permanentmagnetische Erregermagnete auf, sodass die Polarität des durch die Erregermagnete am Ort des Wiegand-Multiturnsensors erzeugten Erregermagnetfeldes bei einer vollen Umdrehung der Rotoreinheit mindestens viermal wechselt und folglich bei einer vollen Umdrehung der Rotoreinheit mindestens vier Wiegand-Pulse im Wiegand-Multiturnsensorerzeugt werden. Dies ermöglicht die Definition mehrerer Initialisierungswinkelposition, sodass zur Durchführung des erfindungsgemäßen Verfahrens zur Initialisierung des Drehwinkelmesssystems nur eine relativ geringe Verdrehung der Welle erforderlich ist. Ferner ermöglichen die mindestens vier Erregermagnete eine besonders zuverlässige und exakte Erfassung der Drehbewegung der Welle.

Vorteilhafterweise ist die Rotoreinheit des Drehwinkelmesssystems durch eine erste Baugruppe gebildet und ist die Statoreinheit des Drehwinkelmesssystems durch eine separate zweite Baugruppe gebildet, wobei die erste Baugruppe und die zweite Baugruppe nacheinander an der Welle montierbar sind. Dies ermöglicht eine einfache Montage des Drehwinkelmesssystems an der Welle.

Ein Ausführungsbeispiel eines erfindungsgemäßen Drehwinkelmesssystems wird nachfolgend anhand der beigefügten Figuren beschrieben, wobei
Figur 1 eine Schnittdarstellung eines erfindungsgemäßen Drehwinkelmesssystems zeigt,
Figur 2 einen Ausschnitt einer Statoreinheit des Drehwinkelmesssystems aus Figur 1 zeigt,
Figur 3 eine Draufsicht auf eine Rotoreinheit des Drehwinkelmesssystems aus Figur 1 zeigt, wobei die Rotoreinheit in einer Nullwinkelposition angeordnet ist,
Figur 4 die Rotoreinheit aus Figur 3 in einer Ausgangswinkelposition nach der Montage des Drehwinkelmesssystems an einer Welle zeigt, und in einem Datenspeicher nach der Montage gespeicherte Werte zeigt, und Figur 5 die in eine Initialisierungswinkelposition verdrehte Rotoreinheit aus Figur 3 zeigt, in dem Datenspeicher nach der Verdrehung gespeicherte Werte zeigt, und ein Ablaufdiagramm eines von einer Initialisierungseinheit des Drehwinkelmesssystems ausgeführten Verfahrens zur Initialisierung des Drehwinkelmesssystems zeigt.

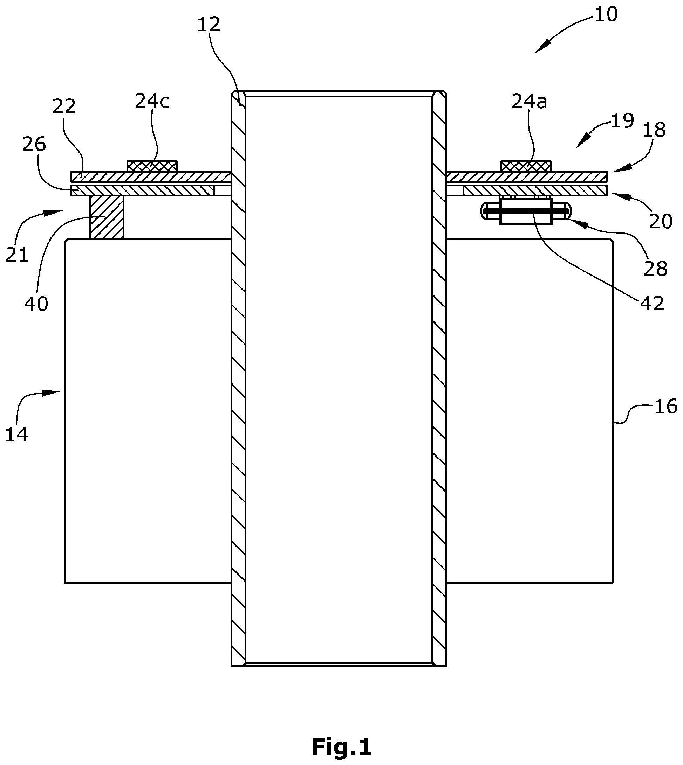

Fig. 1 zeigt ein Drehwinkelmesssystem 10 zur Erfassung der Drehbewegung einer Welle 12. Die Welle 12 ist im vorliegenden Ausführungsbeispiel eine Hohlwelle, die sich im Wesentlichen in axialer Richtung erstreckt und von einem Antriebsmotor 14 mit einem statischen Motorgehäuse 16 angetrieben wird. Das Drehwinkelmesssystem 10 umfasst eine Rotoreinheit 18 und eine Statoreinheit 20. Im vorliegenden Ausführungsbeispiel ist die Rotoreinheit durch eine erste Baugruppe 19 gebildet und ist die Statoreinheit 20 durch eine zweite Baugruppe 21 gebildet, wobei die erste Baugruppe 19 und die zweite Baugruppe 21 bei der Montage des Drehwinkelmesssystems 10 nacheinander an der Welle 12 montiert werden.

Die Rotoreinheit 18 umfasst eine ringscheibenförmige Rotorplatine 22, die die Welle 12 radial umschließt und direkt an der Welle 12 befestigt ist. Die Rotoreinheit 18 ist somit drehfest mit der Welle 12 verbunden. Auf der Rotorplatine 22 sind vier permanentmagnetische Erregermagnete 24a-d angeordnet. Die Erregermagnete 24a-d sind im vorliegenden Ausführungsbeispiel jeweils diametral magnetisierte Scheibenmagnete und sind derart angeordnet, dass sich ihre Magnetisierungsrichtung jeweils im Wesentlichen parallel zu einer radialen Richtung erstreckt, also derart, dass die Magnetpole N,S jeweils in radialer Richtung benachbart angeordnet sind. Die Erregermagnete 24a-d sind insbesondere derart angeordnet, dass in Umfangsrichtung benachbarte Erregermagnete 24a-d entgegengesetzte Magnetisierungsrichtungen aufweisen.

Die Statoreinheit 20 umfasst eine ringscheibenförmige Statorplatine 26, die die Welle 12 radial umschließt. Auf der Statorplatine 26 ist ein Wiegand-Multiturnsensor 28, ein Datenspeicher 32 und ein integrierter Schaltkreis 34 angeordnet, der eine Auswerteeinheit 36 und eine Initialisierungseinheit 38 bildet. Die Statoreinheit 20 ist im vorliegenden Ausführungsbeispiel über mehrere Befestigungsmittel 40 an dem Motorgehäuse 16 befestigt.

Der Wiegand-Multiturnsensor 28 ist derart angeordnet, dass sich ein Wiegand-Draht 42 des Wiegand-Multiturnsensor 28 in einer radialen Richtung erstreckt. Der Wiegand-Multiturnsensor 28 ist im Wesentlichen im gleichen radialen Abstand zu der Welle 12 angeordnet, wie die Erregermagnete 24a-d, sodass das von den Erregermagneten 24a-d erzeugte Erregermagnetfeld von dem Wiegand-Multiturnsensor 28 zuverlässig erfasst werden kann.

Das Drehwinkelmesssystem 10 umfasst ferner eine Singleturnsensoreinheit 29. Im vorliegenden Ausführungsbeispiel umfasst die Singleturnsensoreinheit 29 einen optischen Singleturnsensor 30, der auf der Statorplatine 26 angeordnet ist, und eine nicht dargestellte, an der Rotoreinheit 18 ausgebildete Codespur, die durch den Singleturnsensor 30 abgetastet wird.

In dem Datenspeicher 32 sind vier Initialisierungswinkelpositionswerte W1-4 gespeichert, wobei im vorliegenden Ausführungsbeispiel W1 = 45° ist, W2 = 135° ist, W3 = 225° ist und W4 = 315° ist. Ferner ist in dem Datenspeicher 32 zu jedem Initialisierungswinkelpositionswert W1-4 ein Soll-Teilsegmentwert HS1-4 gespeichert, der angibt, in welchem 360°/N-Teilsegment einer vollen Umdrehung sich die Rotoreinheit 18 bezogen auf die Statoreinheit 20 befindet. Im vorliegenden Ausführungsbeispiel ist N=2, sodass der Soll-Teilsegmentwert HS1-4 angibt, ob sich die Rotoreinheit 18 bezogen auf die Statoreinheit 20 in der jeweiligen Initialisierungswinkelposition in einem ersten Halbsegment (HS = 1: 0° bis 180°) oder in einem zweiten Halbsegment (HS = 2: 180° bis 360°) der vollen Umdrehung befindet. Für das vorliegende Ausführungsbeispiel ist folglich HS1 = HS2 = 1 und HS3 = HS4 = 2. Ferner ist in dem Datenspeicher 32 zu jedem Initialisierungswinkelpositionswert W1-4 ein Soll-Pulspolaritätswert PP1-4 gespeichert, der angibt, welche Polarität (PP = 1: Erregermagnet-Nordpol außen; PP = 2: Erregermagnet-Südpol außen) der letzte in dem Wiegand-Multiturnsensor 28 ausgelöste Wiegand-Puls für die jeweilige Initialisierungswinkelposition haben müsste. Für das vorliegende Ausführungsbeispiel ist folglich PP1 = PP3 = 2 und PP2 = PP4 = 1.

Die Auswerteeinheit 36 ist mit dem Wiegand-Multiturnsensor 28, dem Singleturnsensor 30 und dem Datenspeicher 32 verbunden. Die Auswerteeinheit 36 ist ausgebildet, durch Auswertung der Sensorsignale des Wiegand-Multiturnsensors 28 und des Singleturnsensors 30 einen Ist-Teildrehungszählwert Un und einen Ist-Winkelpositionswert Wn zu bestimmen, wobei der Ist-Teildrehungszählwert Un eine aktuelle Anzahl von 360/N-Teildrehungen, hier also eine aktuelle Anzahl von Halbdrehungen, der Rotoreinheit 18 relativ zur Statoreinheit 20 und somit eine Anzahl von Halbdrehungen der Welle 12 angibt, und wobei der Ist-Winkelpositionswert Wn eine aktuelle Winkelposition der Rotoreinheit 18 relativ zur Statoreinheit 20 angibt. Die Auswerteeinheit 36 ist ferner ausgebildet, einen Ist-Pulspolaritätswert PPn zu bestimmen, der angibt, welche Polarität der letzte in dem Wiegand-Multiturnsensor 28 ausgelöste, nicht verkümmerte Wiegand-Puls hatte. Die Auswerteeinheit 36 ist ferner ausgebildet, den bestimmten Ist-Teildrehungszählwert Un, den bestimmten Ist-Winkelpositionswert Wn und den bestimmten Ist-Pulspolaritätswert PPn in dem Datenspeicher 32 abzuspeichern.

Die Initialisierungseinheit 38 ist zur Initialisierung des Drehwinkelmesssystems 10 bedarfsweise aktivierbar, beispielsweise durch setzen eines entsprechenden Bitschalters im Datenspeicher 32.

Die Initialisierungseinheit 38 ist ausgebildet, eine vordefinierte Initialisierungswinkelposition einzustellen. Hierfür ist die Initialisierungseinheit 38 ausgebildet, alle Initialisierungswinkelpositionswerte W1-4 aus dem Datenspeicher 32 auszulesen und (direkt oder indirekt) ein Start-Signal an den Antriebsmotor 14 bereitzustellen, um eine Drehbewegung der Welle 12 und somit der Rotoreinheit 18 relativ zur Statoreinheit 20 zu starten. Die Initialisierungseinheit 38 ist ausgebildet, im Wesentlichen kontinuierlich die Ist-Winkelposition Wn aus dem Datenspeicher 32 auszulesen und mit den Initialisierungswinkelpositionswerten W1-4 abzugleichen. Die Initialisierungseinheit 38 ist ausgebildet, (direkt oder indirekt) ein Stopp-Signal an den Antriebsmotor 14 bereitzustellen, um die Drehbewegung der Welle 12 und somit der Rotoreinheit 18 relativ zur Statoreinheit 20 zu stoppen, falls die ausgelesene Ist-Winkelposition Wn mit einem Initialisierungswinkelpositionswert W1-4 übereinstimmt.

Die Initialisierungseinheit 38 ist ferner ausgebildet, eine Überprüfung hinsichtlich eines "verkümmerten" Pulses durchzuführen. Hierfür ist die Initialisierungseinheit 38 ausgebildet, den der zuvor eingestellten Initialisierungswinkelposition zugeordneten Soll-Pulspolaritätswert P1-4 und den Ist-Pulspolaritätswert PPn aus dem Datenspeicher 32 auszulesen und den ausgelesenen Ist-Pulspolaritätswert PPn mit dem ausgelesenen Soll-Pulspolaritätswert P1-4 abzugleichen.

Die Initialisierungseinheit 38 ist ferner ausgebildet, die nächste Initialisierungswinkelposition PP1-4 einzustellen, falls der Ist-Pulspolaritätswert PPn nicht mit dem ausgelesenen Soll-Pulspolaritätswert P1-4 übereinstimmt. Hierfür ist die Initialisierungseinheit 38 im Speziellen ausgebildet, (direkt oder indirekt) ein Start-Signal an den Antriebsmotor 14 bereitzustellen, um eine Drehbewegung der Welle 12 zu starten, im Wesentlichen kontinuierlich die Ist-Winkelposition Wn aus dem Datenspeicher 32 auszulesen und mit den Initialisierungswinkelpositionswerten W1-4 abzugleichen, und (direkt oder indirekt) ein Stopp-Signal an den Antriebsmotor 14 bereitzustellen, um die Drehbewegung der Welle 12 zu stoppen, falls die ausgelesene Ist-Winkelposition Wn mit einem der bestimmten Initialisierungswinkelpositionswerte W1-4 übereinstimmt.

Die Initialisierungseinheit 38 ist ferner ausgebildet, den im Datenspeicher 32 gespeicherten Ist-Teildrehungszählwert Un zu überprüfen und eventuell zu korrigieren. Hierfür ist die Initialisierungseinheit 38 ausgebildet, den Ist-Teildrehungszählwert Un und den der eingestellten Initialisierungswinkelposition zugeordneten Soll-Teilsegmentwert HS1-4 aus dem Datenspeicher auszulesen und aus dem Ist-Teildrehungszählwert Un durch Auswerten des ausgelesenen Ist-Teildrehungszählwertes Un einen Ist-Teilsegmentwert HSn zu bestimmen, der angibt, in welchem 360°/N-Teilsegment einer vollen Umdrehung sich die Rotoreinheit 18 bezogen auf die Statoreinheit 20 befindet. Im vorliegenden Ausführungsbeispiel gibt der Ist-Teilsegmentwert HSn also an, ob sich die Rotoreinheit 18 bezogen auf die Statoreinheit 20 im ersten Halbsegment oder im zweiten Halbsegment der vollen Umdrehung befindet. Hierbei ergibt sich aus einem ungeraden Ist-Teildrehungszählwert Un der Ist-Teilsegmentwert HSn = 1 (erstes Halbsegment) und aus einem geraden Ist-Teildrehungszählwert Un der Ist-Teilsegmentwert HSn = 2 (zweites Halbsegment). Die Initialisierungseinheit 38 ist ferner ausgebildet, den bestimmten Ist-Teilsegmentwert HSn mit dem ausgelesenen Soll-Teilsegmentwert HS1-4 abzugleichen, und den im Datenspeicher 32 gespeicherten Ist-Teildrehungszählwert Un um einen Wert X=N/2=1 (entspricht einer Halbdrehung) zu erhöhen (alternativ: um X=N/2=1 zu verringern), falls der bestimmte Ist-Teilsegmentwert HSn nicht mit dem ausgelesenen Soll-Teilsegmentwert HS1-4 übereinstimmt.

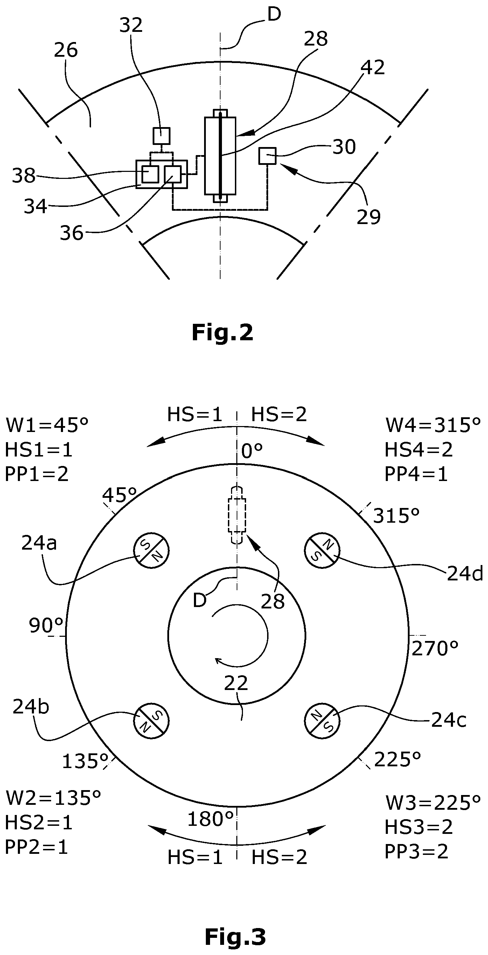

Zur Veranschaulichung der einzelnen Werte zeigt Fig. 3 die Rotoreinheit 18 in einer Nullwinkelposition (Wn = 0°). An der radialen Außenseite der Rotoreinheit 18 ist hierbei eine Winkelskala eingezeichnet, wobei für jede rotatorische Position der Rotoreinheit 18 der jeweilige Ist-Winkelpositionswert Wn durch Projektion der Wiegand-Draht-Erstreckungsrichtung D des feststehenden Wiegand-Multiturnsensor 28 auf die (virtuell rotierte) Winkelskala bestimmt werden kann. Ferner sind in Fig. 3 die vier den gespeicherten Initialisierungswinkelpositionswerten WS1-4 entsprechenden Winkelpositionen jeweils mit dem entsprechenden Soll-Teilsegmentwert HS1-4 und dem entsprechenden Soll-Pulspolaritätswert PP1-4 dargestellt.

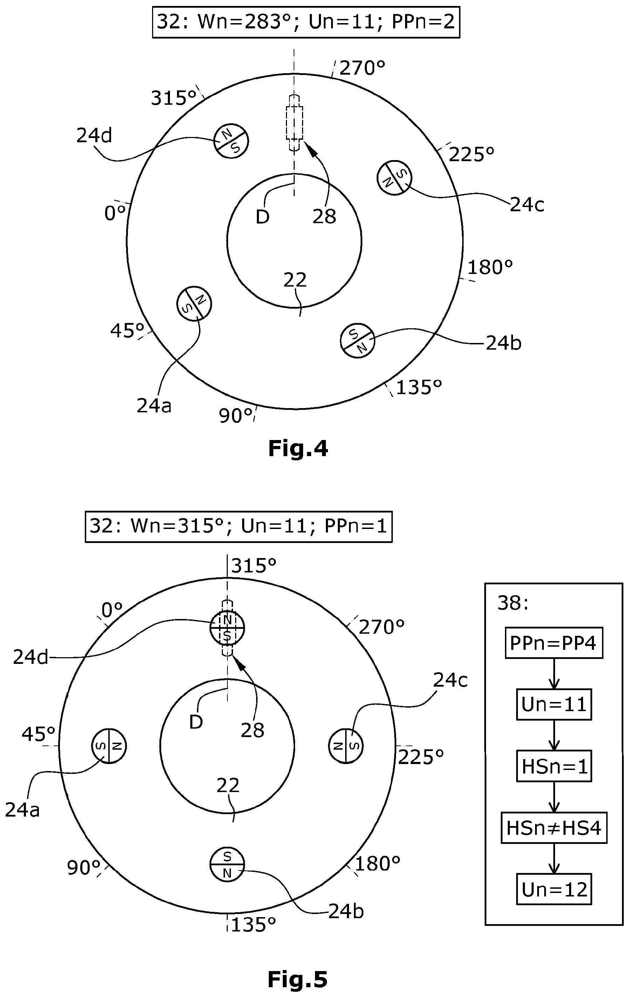

Fig. 4 zeigt die Rotoreinheit 18 in einer beispielhaften Ausgangswinkelposition nach der Montage des Drehwinkelmesssystems 10 an der Welle 12, wobei im Datenspeicher 32 der Ist-Winkelpositionswert Wn = 283°, der Ist-Teildrehungszählwert Un = 11 und der Ist-Pulspolaritätswert PPn = 2 gespeichert sind.

Erfindungsgemäß wird nach der Montage des Drehwinkelmesssystems 10 an der Welle 12 die Initialisierungseinheit 38 aktiviert, um eine Initialisierung des Drehwinkelmesssystems 10 durchzuführen.

Zum Einstellen einer über die Initialisierungswinkelpositionswerte W1-4 vordefinierten Initialisierungswinkelposition stellt die Initialisierungseinheit 38 das Start-Signal an den Antriebsmotor 14 bereit, um eine Drehbewegung der Welle 12 und somit der Rotoreinheit 18 relativ zur Statoreinheit 20 im Uhrzeigersinn zu starten. Durch die Auswerteeinheit 36 werden während der Drehbewegung im Wesentlichen kontinuierlich der Ist-Teildrehungszählwert Un, der Ist-Winkelpositionswert Wn und der Ist-Pulspolaritätswert PPn bestimmt und im Datenspeicher 32 abgespeichert. Die Initialisierungseinheit 38 liest den im Datenspeicher 32 gespeicherten Ist-Winkelpositionswert Wn aus und vergleicht den ausgelesenen Ist-Winkelpositionswert Wn mit den ebenfalls aus dem Datenspeicher 32 ausgelesenen Initialisierungswinkelpositionswerten W1-4. Falls der ausgelesene Ist-Winkelpositionswert Wn mit einem der Initialisierungswinkelpositionswerte W1-4 übereinstimmt, stellt die Initialisierungseinheit 38 das Stopp-Signal an den Antriebsmotor 14 bereit, um die Drehbewegung der Welle 12 zu stoppen.

Ausgehend von der in Fig. 4 dargestellten Ausgangswinkelposition mit dem Ist-Winkelpositionswert Wn = 283°, wird durch die Initialisierungseinheit 38 folglich die in Fig. 5 dargestellte, dem vierten Initialisierungswinkelpositionswert W4 = 315° entsprechende Initialisierungswinkelposition eingestellt.

Nach dem Einstellen der vordefinierten Initialisierungswinkelposition liest die Initialisierungseinheit 38 zuerst den Ist-Pulspolaritätswert PPn aus dem Datenspeicher 32 aus und gleicht den ausgelesenen Ist-Pulspolaritätswert PPn mit dem ebenfalls aus dem Datenspeicher 32 ausgelesenen, dem jeweiligen Initialisierungswinkelpositionswert W1-4 (hier: W4) zugeordneten Soll-Pulspolaritätswert PP1-4 (hier: PP4 = 1) ab.

Für das beschriebene Beispiel stimmt der ausgelesene Ist-Pulspolaritätswert PPn folglich mit dem Soll-Pulspolaritätswert PP4 der eingestellten Initialisierungswinkelposition überein. Falls dies nicht der Fall wäre, würde die Initialisierungseinheit 38 das Start-Signal an den Antriebsmotor 14 bereitstellen, um eine Drehbewegung der Welle 12 zu starten, und die Drehbewegung stoppen, wenn der aus dem Datenspeicher 32 ausgelesene Ist-Winkelpositionswert Wn wieder mit einem der Initialisierungswinkelpositionswerte W1-4 übereinstimmt. Die Initialisierungseinheit 38 würde in diesem Fall folglich die in Drehrichtung nächste Initialisierungswinkelposition (hier: W1) einstellen.

Anschließend liest die Initialisierungseinheit 38 den Ist-Teildrehungszählwert Un (hier: Un = 11) aus dem Datenspeicher 32 aus, bestimmt aus dem ausgelesenen Ist-Teildrehungszählwert Un den Ist-Teilsegmentwert HSn (hier: HSn = 1), und gleicht den bestimmten Ist-Teilsegmentwert HSn mit dem aus dem Datenspeicher 32 ausgelesenen, dem jeweiligen Initialisierungswinkelpositionswert W1-4 (hier: W4) zugeordneten Soll-Teilsegmentwert HS1-4 (hier: HS4 = 2) ab.

Für das beschriebene Beispiel stimmt der bestimmte Ist-Teilsegmentwert HSn folglich nicht mit dem Soll-Teilsegmentwert HS4 der eingestellten Initialisierungswinkelposition überein. Die Initialisierungseinheit 38 erhöht daher den im Datenspeicher 32 gespeicherten Ist-Teildrehungszählwert Un um X=N/2=1, also um einen einer Halbdrehung entsprechenden Wert. Im Datenspeicher 32 ist anschließend folglich der Ist-Teildrehungszählwert Un = 12 gespeichert, woraus sich der Ist-Teilsegmentwert HSn = 2 ergibt.

Nach der erfindungsgemäßen Initialisierung stimmt der aus dem im Datenspeicher 32 gespeicherten Ist-Teildrehungszählwert Un (hier: Un = 12) bestimmte Ist-Teilsegmentwert HSn (hier: HSn = 2) folglich mit dem der eingestellten Initialisierungswinkelposition entsprechenden Soll-Teilsegmentwert HS1-4 (hier: HS4 = 2) überein.

### Bezugszeichenliste

- 10: Drehwinkelmesssystem
- 12: Welle
- 14: Antriebsmotor
- 16: Motorgehäuse
- 18: Rotoreinheit
- 19: erste Baugruppe
- 20: Statoreinheit
- 21: zweite Baugruppe
- 22: Rotorplatine
- 24a-d: Erregermagnete
- 26: Statorplatine
- 28: Wiegand-Multiturnsensor
- 29: Singleturnsensoreinheit
- 30: Singleturnsensor
- 32: Datenspeicher
- 34: integrierter Schaltkreis
- 36: Auswerteeinheit
- 38: Initialisierungseinheit
- 40: Befestigungsmittel
- 42: Wiegand-Draht
- D: Wiegand-Draht-Erstreckungsrichtung
- HS1-4: Soll-Teilsegmentwerte
- HSn: Ist-Teilsegmentwert
- N: magnetischer Nordpol
- PP1-4: Soll-Pulspolaritätswerte
- PPn: Ist-Pulspolaritätswert
- S: magnetischer Südpol
- Un: Ist-Teildrehungszählwert
- W1-4: Initialisierungswinkelpositionswerte
- Wn: Ist-Winkelpositionswert

## Patentansprüche

1. Verfahren zur Initialisierung eines Drehwinkelmesssystems (10) mit den folgenden Verfahrensschritten:
- Einstellen einer vordefinierten Initialisierungswinkelposition einer Rotoreinheit (18) relativ zu einer Statoreinheit (20),
- Auslesen eines Ist-Teildrehungszählwertes (Un) aus einem Datenspeicher (32), wobei der Ist-Teildrehungszählwert (Un) eine Anzahl von 360°/N-Teildrehungen der Rotoreinheit (18) bezogen auf die Statoreinheit (20) angibt, wobei gilt N=2ⁿ mit n=1, 2, 3, ...,
- Bestimmen eines Ist-Teilsegmentwertes (HSn) aus dem Ist-Teildrehungszählwert (Un), wobei der Ist-Teilsegmentwert (HSn) angibt, in welchem 360°/N-Teilsegment einer vollen Umdrehung sich die Rotoreinheit (18) bezogen auf die Statoreinheit (20) befindet, und
- Erhöhen oder Verringern des im Datenspeicher (32) gespeicherten Ist-Teildrehungszählwertes (Un), falls der Ist-Teilsegmentwert (HSn) nicht mit einem der vordefinierten Initialisierungswinkelposition zugeordneten Soll-Teilsegmentwert (HS1-4) übereinstimmt.

2. Verfahren zur Initialisierung eines Drehwinkelmesssystems (10) nach Anspruch 1, wobei zum Einstellen der vordefinierten Initialisierungswinkelposition der Rotoreinheit (18) relativ zur Statoreinheit (20) wie folgt verfahren wird:
- Starten einer Drehbewegung der Rotoreinheit (18) relativ zur Statoreinheit (20),
- Bestimmen eines Ist-Winkelpositionswertes (Wn), wobei der Ist-Winkelpositionswert (Wn) eine relative Winkelposition der Rotoreinheit (18) bezogen auf die Statoreinheit (20) angibt, und
- Abgleichen des bestimmten Ist-Winkelpositionswertes (Wn) mit einem der vordefinierten Initialisierungswinkelposition zugeordneten Initialisierungswinkelpositionswert (W1-4).

3. Verfahren zur Initialisierung eines Drehwinkelmesssystems (10) nach einem der vorhergehenden Ansprüche, wobei
- nach dem Einstellen der vordefinierten Initialisierungswinkelposition ein Ist-Pulspolaritätswert (PPn), der die Polarität des letzten in einem Wiegand-Multiturnsensor (28) ausgelösten Wiegand-Pulses angibt, aus einem Datenspeicher (32) ausgelesen wird,
- der ausgelesene Ist-Pulspolaritätswert (PPn) mit einem der eingestellten Initialisierungswinkelposition zugeordneten Soll-Pulspolaritätswert (PP1-4) abgeglichen wird, und
- die Rotoreinheit (18) in die nächste Initialisierungswinkelposition gedreht wird, falls der Ist-Pulspolaritätswert (PPn) nicht mit dem der eingestellten Initialisierungswinkelposition zugeordneten Soll-Pulspolaritätswert (PP1-4) übereinstimmt.

4. Drehwinkelmesssystem (10) zur Erfassung einer Drehbewegung einer Welle (12), umfassend:
- eine drehbare Rotoreinheit (18), die ausgebildet ist, mit der Welle (12) mitdrehend montiert zu sein, und die mehrere permanentmagnetische Erregermagnete (24a-d) aufweist,
- eine feststehende Statoreinheit (20) mit
• einem Wiegand-Multiturnsensor (28),
• einem Datenspeicher (32) und
• einer Auswerteeinheit (36), und
- eine Singleturnsensoreinheit (29), durch die eine Winkelposition der Rotoreinheit (18) bezogen auf die Statoreinheit (20) erfassbar ist,
wobei die Auswerteeinheit (36) mit dem Wiegand-Multiturnsensor (28), der Singleturnsensoreinheit (29) und dem Datenspeicher (32) verbunden ist und ausgebildet ist, einen Ist-Teildrehungszählwert (Un), der eine Anzahl von 360°/N-Teildrehungen der Rotoreinheit (18) bezogen auf die Statoreinheit (20) angibt, wobei gilt N=2ⁿ mit n=1, 2, 3, ..., und einen Ist-Winkelpositionswert (Wn), der eine relative Winkelposition der Rotoreinheit (18) bezogen auf die Statoreinheit (20) angibt, zu bestimmen und den bestimmten Ist-Teildrehungszählwert (Un) sowie den bestimmten Ist-Winkelpositionswert (Wn) in dem Datenspeicher (32) abzuspeichern, **dadurch gekennzeichnet, dass**
eine Initialisierungseinheit (38) vorhanden ist, der ein Soll-Teilsegmentwert (HS1-4) vorgegeben ist, und die ausgebildet ist,
- den Ist-Teildrehungszählwert (Un) aus dem Datenspeicher (32) auszulesen,
- einen Ist-Teilsegmentwert (HSn), der angibt, in welchem 360°/N-Teilsegment einer vollen Umdrehung sich die Rotoreinheit (18) bezogen auf die Statoreinheit (20) befindet, aus dem Ist-Teildrehungszählwert (Un) zu bestimmen, und
- den im Datenspeicher (32) gespeicherten Ist-Teildrehungszählwert (Un) zu erhöhen oder zu verringern, falls der Ist-Teilsegmentwert (HSn) nicht mit dem vorgegebenen Soll-Teilsegmentwert (HS1-4) übereinstimmt.

5. Drehwinkelmesssystem (10) nach Anspruch 4, wobei die Rotoreinheit (18) mindestens vier permanentmagnetische Erregermagnete (24a-d) aufweist.

6. Drehwinkelmesssystem (10) nach Anspruch 4 oder 5, wobei die Rotoreinheit (18) durch eine erste Baugruppe (19) gebildet ist und die Statoreinheit (20) durch eine zweite Baugruppe (21) gebildet ist, und wobei die erste Baugruppe (19) und die zweite Baugruppe (21) nacheinander an der Welle (12) montierbar sind.

## Claims

1. Method for initializing an angle-of-rotation measurement system (10) with the following method steps:
- Setting a predefined initialization angular position of a rotor unit (18) relative to a stator unit (20),
- reading an actual partial rotation count value (Un) from a data storage (32), wherein the actual partial rotation count value (Un) indicates a number of 360°/N partial rotations of the rotor unit (18) relative to the stator unit (20), wherein N=2ⁿ with n=1, 2, 3, ...,
- determining an actual partial segment value (HSn) from the actual partial rotation count value (Un), wherein the actual partial segment value (HSn) indicates in which 360°/N partial segment of a full revolution the rotor unit (18) is located relative to the stator unit (20), and
- increasing or decreasing the actual partial rotation count value (Un) which is stored in the data storage (32) if the actual partial segment value (HSn) does not correspond to a target partial segment value (HS1-4) which is assigned to the predefined initialization angular position.

2. Method for initializing an angle-of-rotation measurement system (10) according to claim 1, wherein for setting the predefined initialization angular position of the rotor unit (18) relative to the stator unit (20), the following steps are performed:
- Starting a rotational movement of the rotor unit (18) relative to the stator unit (20),
- determining an actual angular position value (Wn), wherein the actual angular position value (Wn) indicates a relative angular position of the rotor unit (18) with respect to the stator unit (20), and
- comparing the determined actual angular position value (Wn) with an initialization angular position value (W1-4) which is assigned to the predefined initialization angular position.

3. Method for initializing an angle-of-rotation measurement system (10) according to one of the preceding claims, wherein
- after setting the predefined initialization angular position, an actual pulse polarity value (PPn), which indicates the polarity of the last Wiegand pulse triggered in a Wiegand multiturn sensor (28), is read out from a data storage (32),
- the read-out actual pulse polarity value (PPn) is compared with a target pulse polarity value (PP1-4) assigned to the set initialization angular position, and
- the rotor unit (18) is rotated to the next initialization angular position if the actual pulse polarity value (PPn) does not correspond to the target pulse polarity value (PP1-4) assigned to the set initialization angular position.

4. Angle-of-rotation measurement system (10) for detecting a rotational movement of a shaft (12), comprising:
- a rotatable rotor unit (18) which is designed to be mounted so as to rotate with the shaft (12) and which has a plurality of permanent-magnetic excitation magnets (24a-d),
- a stationary stator unit (20) with
• a Wiegand multiturn sensor (28),
• a data storage (32), and
• an evaluation unit (36), and
- a single-turn sensor unit (29) by means of which an angular position of the rotor unit (18) relative to the stator unit (20) can be detected,
wherein the evaluation unit (36) is connected to the Wiegand multiturn sensor (28), to the single-turn sensor unit (29) and to the data storage (32), and is designed to determine an actual partial rotation count value (Un), which indicates a number of 360°/N partial rotations of the rotor unit (18) relative to the stator unit (20), where N=2ⁿ with n=1, 2, 3, ..., and an actual angular position value (Wn), which indicates a relative angular position of the rotor unit (18) with respect to the stator unit (20), and to store the determined actual partial rotation count value (Un) as well as the determined actual angular position value (Wn) in the data storage (32),
**characterized in that**
an initialization unit (38) is present, which is given a target partial segment value (HS1-4) and which is designed to
- read the actual partial rotation count value (Un) from the data storage (32),
- determine an actual partial segment value (HSn), which indicates in which 360°/N partial segment of a full revolution the rotor unit (18) is located relative to the stator unit (20), based on the actual partial rotation count value (Un), and
- increase or decrease the actual partial rotation count value (Un) which is stored in the data storage (32) if the actual partial segment value (HSn) does not correspond to the given target partial segment value (HS1-4).

5. Angle-of-rotation measurement system (10) according to claim 4, wherein the rotor unit (18) comprises at least four permanent-magnetic excitation magnets (24a-d).

6. Angle-of-rotation measurement system (10) according to claim 4 or 5, wherein the rotor unit (18) is constituted by a first assembly (19) and the stator unit (20) is constituted by a second assembly (21), and wherein the first assembly (19) and the second assembly (21) can be mounted on the shaft (12) one after the other.

## Revendications

1. Procédé d'initialisation d'un système de mesure d'angle de rotation (10) comprenant les étapes de procédé suivantes :
- présélectionner une position angulaire d'initialisation prédéfinie d'une unité de rotor (18) par rapport à une unité de stator (20),
- lire une valeur de comptage de rotations partielles réelles (Un) à partir d'une mémoire de données (32), la valeur de comptage de rotations partielles réelles (Un) indiquant un nombre de rotations partielles de 360°/N de l'unité de rotor (18) par rapport à l'unité de stator (20), N = 2n avec n = 1, 2, 3, ...,
- déterminer une valeur de segment partiel réelle (HSn) à partir de la valeur de comptage de rotations partielles réelles (Un), la valeur de segment partiel réelle (HSn) indiquant dans quel segment partiel de 360°/N d'une rotation complète se trouve l'unité de rotor (18) par rapport à l'unité de stator (20), et
- augmenter ou diminuer la valeur de comptage de rotations partielles réelles (Un) enregistrées dans la mémoire de données (32) si la valeur de segment partiel réelle (HSn) ne coïncide pas avec une valeur de segment partiel de consigne (HS1-4) associée à la position angulaire d'initialisation prédéfinie.

2. Procédé d'initialisation d'un système de mesure d'angle de rotation (10) selon la revendication 1, dans lequel, pour présélectionner la position angulaire d'initialisation prédéfinie de l'unité de rotor (18) par rapport à l'unité de stator (20), on procède comme suit:
- commencer un mouvement de rotation de l'unité de rotor (18) par rapport à l'unité de stator (20),
- déterminer une valeur de position angulaire réelle (Wn), la valeur de position angulaire réelle (Wn) indiquant une position angulaire relative de l'unité de rotor (18) par rapport à l'unité de stator (20), et
- comparer la valeur de position angulaire réelle (Wn) déterminée avec une valeur de position angulaire d'initialisation (W1-4) associée à la position angulaire d'initialisation prédéfinie.

3. Procédé d'initialisation d'un système de mesure d'angle de rotation (10) selon l'une quelconque des revendications précédentes, dans lequel
- après le réglage de la position angulaire d'initialisation prédéfinie, une valeur de polarité d'impulsion réelle (PPn), qui indique la polarité de la dernière impulsion de Wiegand déclenchée dans un capteur à plusieurs tours de Wiegand (28), est lue dans une mémoire de données (32),
- la valeur de polarité d'impulsion réelle (PPn) lue est comparée avec une valeur de polarité d'impulsion de consigne (PP1-4) associée à la position angulaire d'initialisation réglée, et
- l'unité de rotor (18) est tournée dans la position angulaire d'initialisation suivante si la valeur de polarité d'impulsion réelle (PPn) ne coïncide pas avec la valeur de polarité d'impulsion de consigne (PP1-4) associée à la position angulaire d'initialisation réglée.

4. Système de mesure d'angle de rotation (10) pour détecter un mouvement de rotation d'un arbre (12), comprenant:
- une unité de rotor rotative (18) qui est configurée pour être montée en rotation avec l'arbre (12) et qui comprend une pluralité d'aimants d'excitation à aimant permanent (24a-d),
- une unité de stator fixe (20) avec
• un capteur à plusieurs tours de Wiegand (28),
• une mémoire de données (32) et
• une unité d'évaluation (36), et
- une unité de capteur à tour unique (29), par laquelle une position angulaire de l'unité de rotor (18) par rapport à l'unité de stator (20) peut être détectée,
l'unité d'évaluation (36) étant reliée au capteur à tours multiples de Wiegand (28), à l'unité de capteur à tour unique (29) et à la mémoire de données (32) et étant conçue pour déterminer une valeur de comptage de rotations partielles réelles (Un), qui indique un nombre de rotations partielles de 360°/N de l'unité de rotor (18) par rapport à l'unité de stator (20), N = 2n avec n = 1, 2, 3, ..., et une valeur de position angulaire réelle (Wn), qui indique une position angulaire relative de l'unité de rotor (18) par rapport à l'unité de stator (20), et pour mémoriser la valeur de comptage de rotations partielles réelles (Un) déterminée ainsi que la valeur de position angulaire réelle (Wn) déterminée dans la mémoire de données (32),
**caractérisé en ce que**
une unité d'initialisation (38) est présente, à laquelle est prédéfinie une valeur de segment partiel de consigne (HS1-4) et qui est conçue pour
- lire la valeur de comptage de rotations partielles réelles (Un) à partir de la mémoire de données (32),
- déterminer une valeur de segment partiel réelle (HSn), qui indique dans quel segment partiel de 360°/N d'une rotation complète se trouve l'unité de rotor (18) par rapport à l'unité de stator (20), à partir de la valeur de comptage de rotations partielles réelles (Un), et
- augmenter ou diminuer la valeur de comptage de rotations partielles réelles (Un) enregistrées dans la mémoire de données (32) si la valeur de segment partiel réelle (HSn) ne coïncide pas avec la valeur de segment partiel de consigne prédéfinie (HS1-4).

5. Système de mesure d'angle de rotation (10) selon la revendication 4, dans lequel l'unité de rotor (18) comprend au moins quatre aimants d'excitation à aimant permanent (24a-d).

6. Système de mesure d'angle de rotation (10) selon la revendication 4 ou 5, dans lequel l'unité de rotor (18) est formée par un premier module (19) et l'unité de stator (20) est formée par un deuxième module (21), et dans lequel le premier module (19) et le deuxième module (21) peuvent être montés l'un après l'autre sur l'arbre (12).
